# EUROPEAN PATENT APPLICATION

(11) **EP 1 089 413 A2**
(43) Date of publication of application: **04.04.2001**
(21) Application number: 99203423.1
(22) Date of filing: 19.10.1999
(51) Int. Cl.: H02H 3/08

(54) **Current limiter**

(30) Priority: 22.09.1999 NL 1013114
(71) Applicant: Treston Ltd., Central Hong Kong (CN)
(72) Inventor: Geertsma, André, 8042 Ex Zwolle (NL)
(74) Representative: Lips, Hendrik Jan George, Ir.

(57) **Abstract**

The invention relates to incorporating a current limiter between a consumer device and a supply mains, which is provided with detection means for detecting the current acquired, a control/processing unit for comparing the current acquired with a value to be set within a specific range for that current, and with further means for interrupting the voltage presented when the current acquired is higher than the set value. For safety reasons, it has further been provided for, that with the occurrence of short-circuit currents, the presented supply voltage will not be interrupted.

## Description

The invention relates to a current limiter and in particular to a current limiter intended to be used as a protection against taking too much current from an available supply mains. This is especially important in those cases in which one has no direct control over the safety fuses incorporated in the supply mains, such as is generally the case on camping sites.

Furthermore, the maximum power allowed to be used per caravan may be different for each camping site, in which practice has shown that these differences are considerable. This can result in the fact that on one camping site will have largely enough power available on the supply mains of said camping site for use of apparatus connected in the caravans and that with the same power consumption on a next camping site the safety fuses of the camping site owner will melt. Apart from the fact that it's a nuisance that the safety fuses of the camping site owner melt and the camping site owner must be asked to replace the fuses, in practice it may be troublesome to have them replaced immediately, definitely when the fuses melt in the evening or at night.

Even when one knows from practice approximately which apparatus can be connected simultaneously, it is still possible that on switching-on and/or activation of various consumer devices simultaneously, the fuses will melt after all.

The object of the invention is to remove said disadvantages and to provide current limiter which is adjustable and is capable of interrupting the presented voltage quickly enough.

Correspondingly, it is provided for that the current limiter is at least provided with means for detecting the current acquired, a control/processing unit for comparing the current acquired with a value to be set within a certain range, and further means for interrupting the voltage presented when the current acquired is higher than the set value.

According to a further embodiment it is provided for, that the means for detecting the current acquired comprise at least one coupling member which is to be coupled inductively to the presented supply mains, control means having been provided for carrying out a predetermined number of measurements within a predetermined period of time.

The measurements can consist of e.g. sequences of 200 successive measurements carried out at a frequency of 2 kHz. The total measuring time per sequence will then be 100 msec, which at a mains frequency of 50 Hz will mean that the measurements are divided over 5 periods. If between successive sequences of measurements an equal time is maintained in which one sequence of measurements is carried out, then every second 5 sequences of measurements, 1000 measurements in all, will be carried out.

It is provided for that the control/processing unit is arranged such that for each predetermined period of time the effective value or a quantity proportional to it, of the values measured in that period of time is calculated. The effective value can be calculated by e.g. taking the root from the average of the squares of the 200 measured currents in a sequence. By determining a mean effective value across such a number of measurements prevents incidental short changes in current intensity from being decisive for whether or not switching-off the presented voltage. At the same time, in case of an actual current which is too high, a current higher than the set value, the measuring time and the subsequent switching time for interrupting the current is amply within the melting time of a normal, slow fuse for the supply mains.

According to a further embodiment it is provided for, that input means are connected to the control/processing unit, by means of which the value to be set can be set in one or more sequences of stages within the determined range, in which at the same time it has been provided for, that first read out means are connected to the control/processing unit, by means of which at least the set value can be read out.

A simple embodiment provides for that two pressure switches have been mounted on a control panel, in which the value to be set can be increased in stages with a first button and it can be decreased in stages with a second button. There, the control/processing unit can be set such, that in a range of e.g. 1 - 16A, in the lowermost part of the range the stages each represent 0,5A, and in the uppermost part of the range the stages each represent 1A. The first read out means, which can consist of a simple 2-digit display, indicate the stepwise changing of the value to be set and the finally set value.

According to a preferred embodiment second read out means connected to the control/processing unit have been provided, which indicate the course of the detected acquired current or an effective value calculated from it in time, the second read out means consisting of a row of successive signal emitters and the control/processing unit is arranged to divide the set value in as many ranges as there are signal emitters and to drive the signal emitter concerned for a detected value or a calculated effective value.

Preferably, the signal emitters are designed as a series of LEDs mounted in a vertical row, so that with an increasing current, an LED situated increasingly higher in the row will light up. Since the driving of the LEDs is determined anew for each newly set maximum usable current, the visual information for each set value indicated by the LEDs always gives the same ratio number in relation to the maximum allowed consumption.

By employing a row of 10 LEDs it is simple to determine in tenths of percents what the consumption is in relation to the scale or how far the consumption lies from the set maximum value. Then, the visual information can be improved further by mounting LEDs having different colours, in which a number of the upper LEDs might emit e.g. red light.

When exceeding the set value, the control/processing unit will determine that the detected current or the effective value calculated from it is higher than the set value and the presented voltage will be interrupted. A simple and reliable circuit for this purpose, which is furthermore additionally resistent against temporary high currents, is a circuit having a relay.

Then, the control/processing unit is arranged such that when said control/processing unit interrupts the presented voltage, at least an acoustic signal will be emitted. This is desirable since it will not always be clear that the voltage presented has been interrupted by the current limiter. In addition, it is also possible to produce a signal through the LEDs, e.g. by having them flash.

Therefore, the current limiter according to the invention provides for that every time the current consumption exceeds a set value, the voltage will be interrupted. In case of short-circuiting in the caravan, camper or boat, the current limiter discussed thus far will likewise interrupt the presented voltage. However, in case of short-circuiting, it is desirable that the voltage will not be interrupted and the fuses will melt for safety reasons, since the short-circuit may be caused by a more or less structural error within the system applied in a caravan. Therefore, according to the invention it is preferably provided for, that the control/processing unit is arranged such that with an acquired current higher than a predetermined maximum value, in which the predetermined maximum value is higher than the highest value that can be set within the specific range, the presented voltage will not be interrupted.

This can be achieved by comparing the detected current or an effective value calculated from it to both the set value and a predetermined higher maximum value. With a value situated between the set value and the higher maximum value, the relay will de-energize and the presented voltage will be interrupted, with a value situated above the maximum value, the relay remains energized and the fuse of the camping site owner will melt.

It is also possible to provide a second inductive coupling particularly intended for detecting short-circuit currents. There, in a way similar to the one with the first inductive coupling, a number of measurements can be carried out at a specific frequency, and a value calcultated from them can be compared to the maximum value. Since short-circuit currents quickly achieve a high value, which is far beyond the melting current of a fuse, the sampling period can be shorter than the period during which the first inductive coupling is used for sampling.

The logic result signals of the comparisons of measured values or values calculated from them, coming from both inductive couplings with the set value and the maximum value, carried out in the control/processing unit, can be supplied to a simple logic OR-circuit, in which the resultant will decide whether or not the relay will be excited.

Finally, the invention further provides for, that the control/processing unit is arranged such that when connecting the current limiter to the supply mains, the value to be set within a specific range is set to a predetermined low value, which will be at least sufficient for feeding the current limiter. Through this, it can be prevented that on connecting the caravan to the supply mains the current limiter is still set to a value for a previous camping site, which may be too high.

The invention is further explained by way of the example given in the drawing, in which
Fig. 1 shows a functional diagram of the current limiter;
Fig. 2 shows a diagram with the various conditions of the current limiter being checked by the software; and
Fig. 3 shows a front view of a housing for the current limiter.

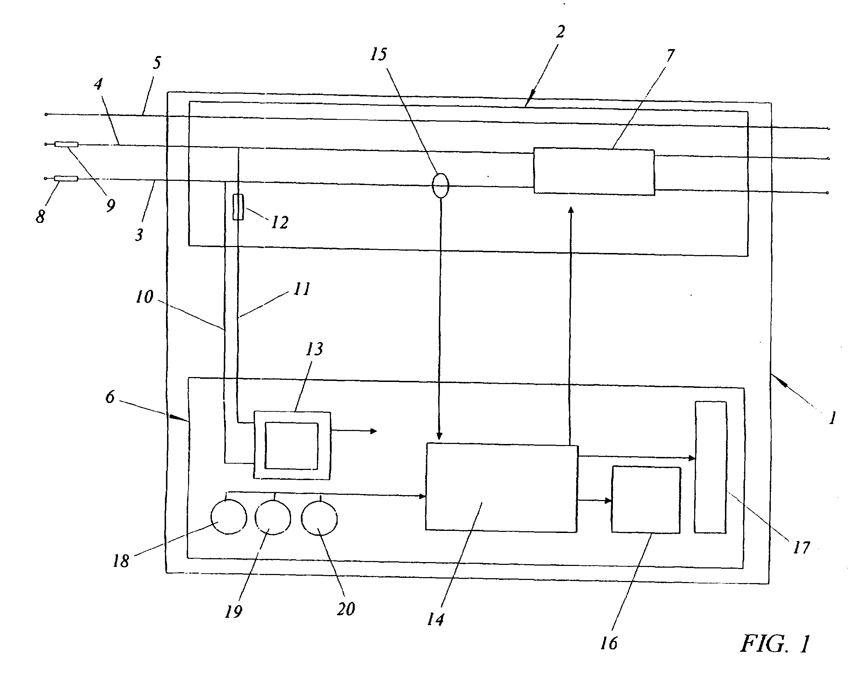

Fig. 1 illustrates schematically the design of the current limiter 1, consisting of a part 2 where the neutral and phase wires 3, 4 of a presented supply mains and a ground wire 5 enter and a control/processing unit 6. The neutral and phase wires 3, 4 incorporate a relay 7 being driven from said control/processing unit 6. Further, the neutral and phase wires contain fuses 8, 9, in this case the fuses owned by the provider of the supply mains.

The supply for control/processing unit 6 is acquired from the neutral and phase wires 3, 4, a fuse 12 being incorporated in line 11, and is supplied to transformer 13. Through a rectifier and stabilizing cicuit not further illustrated, the required voltage can be supplied to control/processing unit 14.

A current detector 15 is mounted around a wire of the presented supply mains and connected to an input of the control/processing unit 14. The current detector can consist of a coil and an amplifier, in which the detected current can be supplied to said control/processing unit 14 as a voltage level correlated to it. Apart from a first coil for detecting and subsequently calculating an effective value of the consumed current, preferably a second coil is provided, by means of which short-circuit currents can be detected.

Relay 7 is driven through an outlet of the control/processing unit 14 dependent on the detected current. Two further outlets drive, respectively, a read out member 16 indicating the set maximum current to be consumed and a further read out member 17 indicating the course of the measured current or its calculated effective value.

Further, a number of push buttons 18, 19, 20 is mounted at the input side of the control/processing unit 14, push button 18 being intended for switching in the current limiter again after the voltage was interrupted in reaction to a consumption which was too high. The push buttons 19 and 20 are intended to set the maximum current upwards or downwards, respectively.

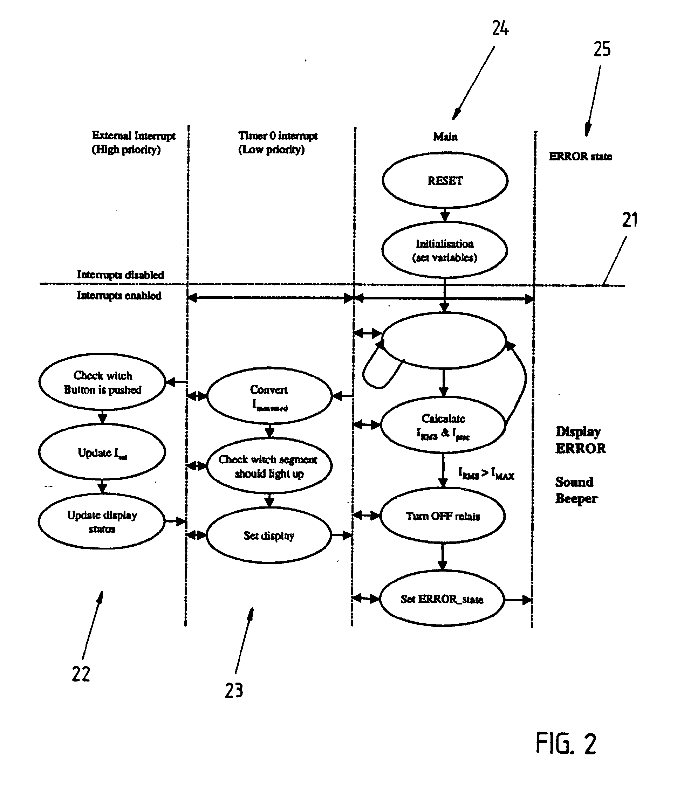

In the diagram of Fig. 2, the line 21 has made a division between an upper part and a lower part, with the situation in the upper part being such that it does not allow any interruptions, as they occur with making settings or driving read out members with new values, and it only allows setting and initializing the current limiter anew.

The diagram is further divided in vertical columns, in which the columns 22 and 23, illustrate the interruptions with high priority and low priority, respectively. The interruptions with high priority given in column 22 concern setting the maximum consumable current, passing the set value on to the control/processing unit 14 and driving the read out member 16 from there.

Column 23 indicates the low priority interruptions, which concern transformation of the measured current, determining which LED of read out member 17 should be driven, and driving the LED concerned.

Column 24 contains the most essential parts of the software, such as measuring the current and calculating the effective value, comparing it to the set maximum value and on exceeding said value, de-energizing the relay 7 and passing on an error message. Passing on the error message can consist of e.g. a step in which a symbol corresponding to an error message is reproduced on the read out member 16 and a step in which an acoustig signal is emitted.

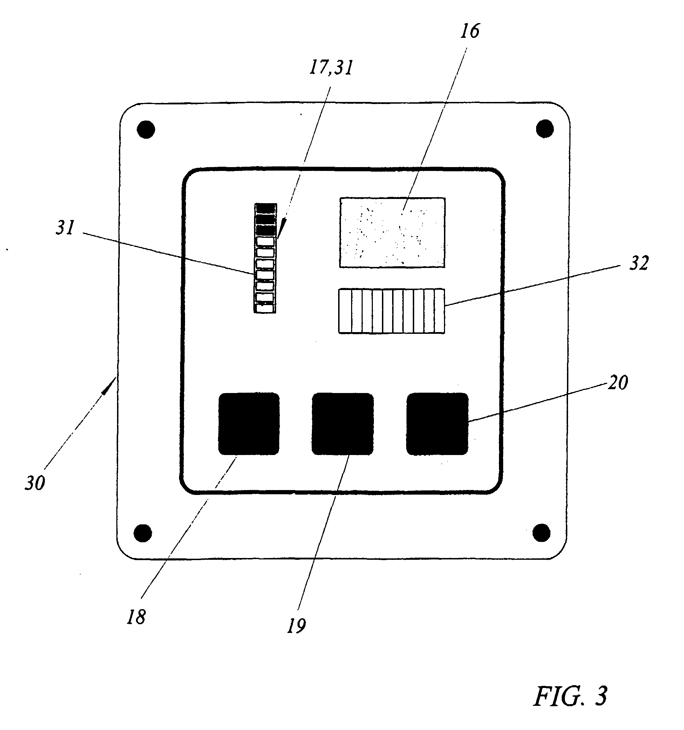

Finally, Fig. 3 illustrates a simple embodiment of a possible front 30 for the relatively small housing in which the complete current limiter can be incorporated. Push buttons 18, 19, 20 are mounted in a row in het lower part, button 18 serving for setting the current limiter anew, and buttons 19, 20 for adjusting the setting of the maximum consumable current upwards and downwards, respectively. The first button 18 can be given a dual function, in which the second function can only be used when the current limiter is in operation. The second function is preferably switching off the read out members 16, 17, by which at night the possibly inconvenient light of the read out members can be switched-off.

Read out member 16 can display two figures with or without decimal point, so that settings below 10A can be displayed in decimals and settings above it only in integrals. Read out member 17 comprises 10 LEDs 31 mounted one above the other in a row, which can be chosen such that successive parts of the range show different colors, in which e.g. the upper three LEDs can emit red light as a warning sign. Finally, a member 32 has been provided for emitting an acoustic warning signal when the set current is exceeded.

## Claims

1. Current limiter destined to be incorporated between a consumer device and a supply mains, characterized in that it is at least provided with means for detecting the current acquired, a control/processing unit for comparing the current acquired with a value to be set within a certain range, and further means for interrupting the voltage presented when the current acquired is higher than the set value.

2. Current limiter according to claim 1, characterized in that the control/processing unit is arranged such that with an acquired current which is higher than a predetermined maximum value, the predetermined maximum value being higher than the highest value within the specific range that can be set, the presented voltage will not be interrupted.

3. Current limiter according to claims 1 - 2, characterized in that the means for detecting the acquired current comprise at least one coupling member which is to be coupled inductively to the presented supply mains, control means having been provided for carrying out a predetermined number of measurements within a predetermined period of time.

4. Current limiter according to claim 3, characterized in that a separate inductive coupling member for detecting short-circuit currents is provided.

5. Current limiter according to claims 3 - 4, characterized in that the control/processing unit is arranged such that for each predetermined period of time the effective value or a quantity proportional to it, of the values measured in that period of time is calculated.

6. Current limiter according to claims 3 - 4, characterized in that the inductive coupling member substantially consists of a coil and an amplifier, in which the output voltage of the amplifier is directly proportional to the detected current.

7. Current limiter according to claims 1 - 6, characterized in that the further means for interrupting the presented voltage comprise at least one relay.

8. Current limiter according to claims 1 - 7, characterized in that input means connected to said control/processing unit have been provided by means of which the value to be set can be set in one or more step sequences within the specific range.

9. Current limiter according to claim 8, characterized in that first read out means connected to said control/ processing unit have been provided by means of which at least the set value can be read out.

10. Current limiter according to claims 1 - 9, characterized in that second read out means connected to said control/processing unit have been provided, which indicate the course of the detected acquired current or an effective value in the time calculated from it.

11. Current limiter according to claim 10, characterized in that said second read out means comprise a row of successive signal emitters, the control/processing unit being arranged to divide the set value in as many ranges as there are signal emitters and to drive the signal emitter concerned for a detected value or a calculated effective value.

12. Current limiter according to claim 11, characterized in that the row of successive signal emitters consist of a row of light emitting diodes.

13. Current limiter according to claim 1 - 12, characterized in that the control/processing unit is arranged such that when said control/processing unit interrupts the presented voltage, at least an acoustic signal will be emitted.

14. Current limiter according to claim 1 - 12, characterized in that the control/processing unit is arranged such that when connecting the current limiter to the supply mains, the value to be set within a specific range is set to a predetermined low value, which will be at least sufficient for feeding the current limiter.
